Europäisches Patentamt

European Patent Office

Office européen des brevets

(19)

(11) **EP 0 800 311 B1**

(12) **EUROPEAN PATENT SPECIFICATION**

(45) Date of publication and mention
of the grant of the patent:
**08.08.2001 Bulletin 2001/32**

(51) Int Cl.⁷: $H04N\ 5/44$, $H04N\ 7/00$

(21) Application number: **96105201.6**

(22) Date of filing: **01.04.1996**

(54) **Circuit for automatic detection of letter box pictures in TV-receivers**

Schaltung zur automatischen Erkennung von "Letter-Box" Bildern in Fernsehempfängern

Circuit pour la détection automatique d'images au format letter-box dans les récepteurs TV

(84) Designated Contracting States:
**DE FR GB IT**

(43) Date of publication of application:
**08.10.1997 Bulletin 1997/41**

(73) Proprietor: **MATSUSHITA ELECTRIC INDUSTRIAL CO., LTD.**
**Osaka 571 (JP)**

(72) Inventors:
• **Schu, Markus**
  **85435 Erding (DE)**
• **Heiss, Rainer, Dr.**
  **63322 Roedermark (DE)**
• **Geissel, Michael**
  **63743 Aschaffenburg-Obernau (DE)**

(74) Representative: **Grünecker, Kinkeldey, Stockmair & Schwanhäusser Anwaltssozietät**
**Maximilianstrasse 58**
**80538 München (DE)**

(56) References cited:
**EP-A- 0 624 031**          **EP-A- 0 625 852**
**EP-A- 0 675 645**          **WO-A-94/19905**

• **IEEE TRANSACTIONS ON CONSUMER ELECTRONICS, vol. 40, no. 3, 1 August 1994, pages 743-751, XP000471244 NAKAGAKI N ET AL: "WIDE ASPECT TV RECEIVER WITH ASPECT DETECTION AND NON-LINEAR CONTROL FOR PICTURE QUALITY"**

EP 0 800 311 B1

**Description**

The present invention relates to a circuit for automatic detection of letter box pictures in TV-receivers, whereby the present invention is, in particular, suited for digital widescreen TV-receivers.

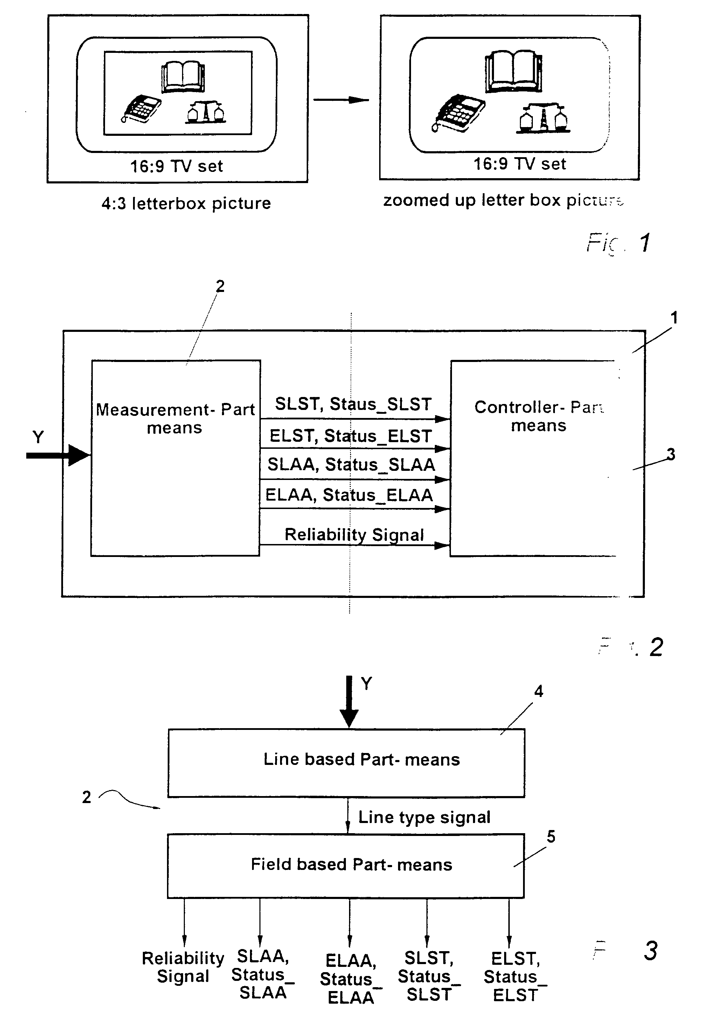

One problem arising from widescreen TV (16:9) is that, in the case of pictures with 4:3 format, blank side panels are visible to the left and right sides of the screen. If the source material has letter box format, black bars exist, in addition, at the top and bottom of the visible picture. The last-mentioned problem may be solved by zooming-up the letter box picture until the picture covers the entire screen of the widescreen TV set. Figure 1 illustrates, on the left hand side, a 4:3 letter box picture displayed by a 16:9 TV set without zooming, and illustrates, on the right hand side, the same picture on the same TV set after zooming. As shown, after the zooming the complete screen of the 16:9 TV set is covered by the visible picture.

In order to be able to zoom the active picture part it is necessary to obtain information as to whether a letter box picture or a normal picture has been received. For this purpose, existing prior art systems have added the necessary information at the transmitter side to the video signal received by the TV set. The information is transmitted in the first half of line 23 and can be decoded at the receiver side. One problem with this prior art approach may be seen from the fact that only some broadcasters actually add this information to the video signal, and that only two different letter box formats, namely 14:9 and 16:9, are distinguished.

According to another prior art approach, the user of the TV receiver can move cursors to the beginning and the end of the active picture area, so that the missing information needed for correct zooming of letter box pictures is provided by the user himself.

Reference EP-A2-0 675 645 describes an apparatus for automatically determining a type of picture format in television receivers. The apparatus classifies each line as black, picture or sub-title by setting two threshold levels and counting the number of pixels less than the first threshold, between the first and the second threshold and greater than the second threshold. The type of each line is determined depending on the counted values.

In view of the prior art, it is the object of the present invention to provide a circuit for automatic detection of letter box pictures with an improved reliability which may be realized with a simple and thus cost effective design.

This object is solved by the subject matter of claim 1.

Preferred embodiments are the subject matter of the dependent claims.

Preferred embodiments of the present invention are described in the following, in connection with the accompanying drawings, which show:

Figure 1 is an illustration in which manner a 4:3 letter box picture can be suitably displayed by a 16:9 TV receiver, after zooming;

Figure 2 is a basic diagram of a preferred embodiment of the inventive circuit;

Figure 3 is a basic diagram of the measurement means shown in Figure 2;

Figure 4 is a basic diagram of the controller means shown in Figure 2;

Figure 5 is a basic diagram of the line-based part means shown in Figure 3;

Figure 6 is a basic diagram of the lowpass filter shown in Figure 5;

Figure 7 is a basic diagram of the field based part-means shown in Figure 3;

Figure 8 is a basic diagram of the start/end-line decision means shown in Figure 7; and

Figure 9 is a basic diagram of the reliability evaluation means shown in Figure 7.

Figure 10 is an illustration of various definitions used for the description of a preferred embodiment of the present invention.

Figures 11a, 11b and 11c are illustrations of the operation of the histogram measurement means, the logo detection means and the line type detection means, respectively, as shown in Figure 5, and

Figure 12 is an illustration of the operation as performed by the start/end-line decision means shown in Figure 7.

A preferred embodiment of the inventive letter box detection circuit 1 comprises a measurement means 2 and a controller means 3. Detection circuit 1 is preferably, implemented within a digital widescreen television receiver.

Measurement means 2 receives luminance signal Y and detects therefrom various characteristics relating to the kind of picture currently received. This information is provided to controller means 3, which, based on predetermined criteria, provides an output representative of the kind of picture currently received.

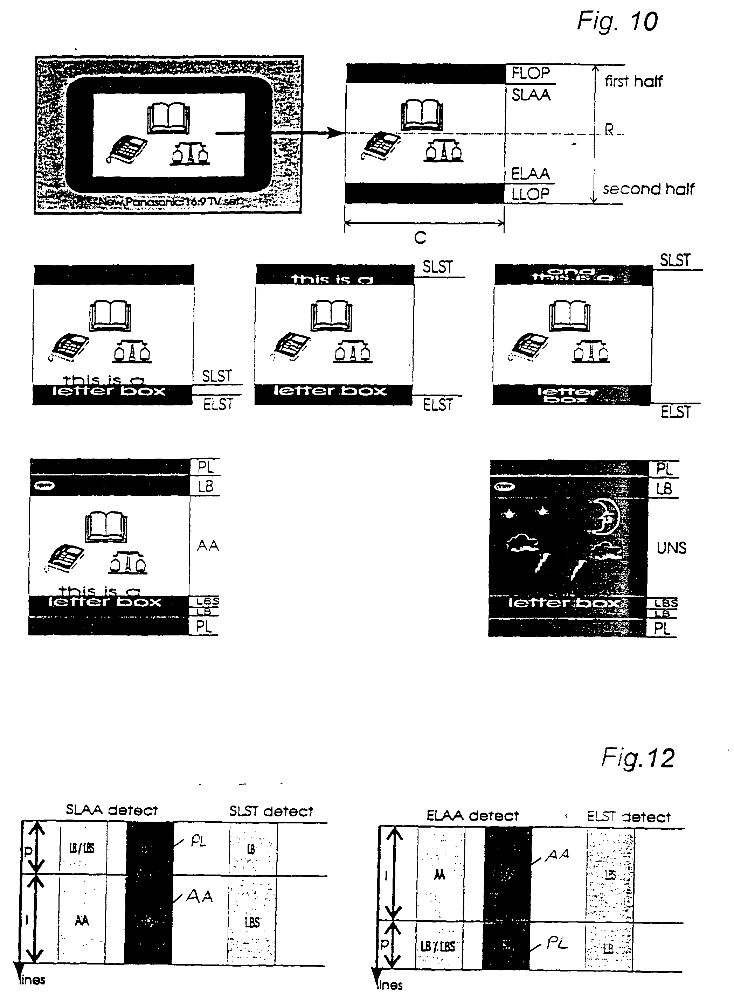

For convenience of the further explanation of the preferred embodiment, some terms and corresponding abbreviations which are used in the following explanation are defined below. These definitions are additionally illustrated in Figure 10.

| Active Area | **AA** | active picture part of the letter box picture |
| Letter Box Area | **LB** | letter box picture part including logos in this part (in Figure 3 the "PANATV" logo) |
| Letter Box Subtitle Area | **LBS** | letter box picture part plus subtitle (in Figure 3 the letter box part with the sentence "letter box") |
| Unsecure Area | **UNS** | something in between active area and letter box area (in Figure 3 the dark picture part with the stars, the flash, the moon and the clouds) |
| Pre-Load Area | **PL** | area before the first line of the complete letter box picture and area after the last line of the letter box picture |
| First Line Of Picture | **FLOP** | the first line of the complete picture |
| Last Line Of Picture | **LLOP** | the last line of the complete picture |
| Start Line Active Area | **SLAA** | the first line of the active picture part |
| End Line Active Area | **ELAA** | the last line of the active picture part |
| Start Line Sub-Title | **SLST** | the first line of the subtitling part |
| End Line Sub-Title | **ELST** | the last line of the last subtitle |
| Active Area First Half | **AAFH** | number of lines with line type AA in the first half of the picture |
| Active Area Second Half | **AASH** | number of lines with line type AA in the second half of the picture |
| Luminance Signal | **Y** | the luminance (brightness) signal of the TV signal |

The main task of the measurement circuit is to provide information in regard to the start and end line of the active picture part, and preferably also in regard to the start and end line of the subtitle picture part. In addition, this circuit provides information in regard to the reliability of the detected information. Measurement means 2 operates on a field-by-field basis and thus, provides each measurement independently from the results of previously measured fields.

Figure 3 shows the basic diagram of the measurement means 2 shown in Figure 2. As can be seen, measurement means or circuit 2 preferably comprises a line based part means or circuit 4 and a field based part means or circuit 5.

The line based part circuit works on each line of the complete picture. The main task of this part is to give sufficient information on the basis of measurement results to decide to which of the possible areas of the picture (compare Figure 10) the current line belongs. This will be referred to in the following as "line type detection".

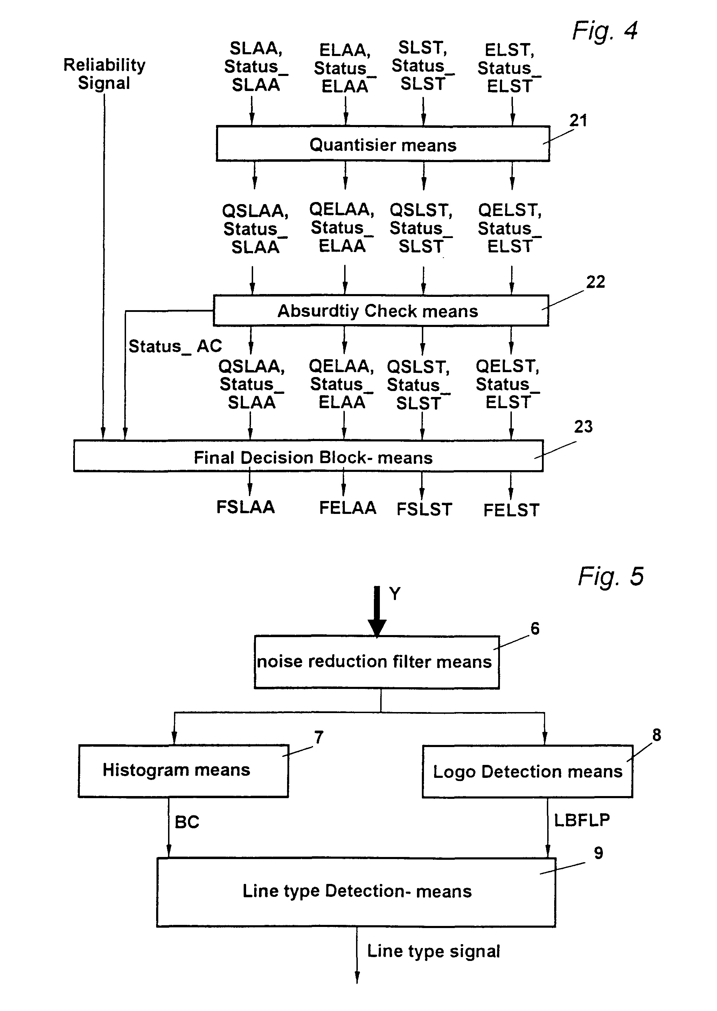

Figure 5 shows line based part means 4 of Figure 3 in more detail. As shown, line based part means 4 comprises a noise reduction filter means 6, a histogram measurement means 7, a logo detection measurement means 8 and a line type detection means 9. Noise reduction filter means is preferably a lowpass filter means but may, however, also be omitted.

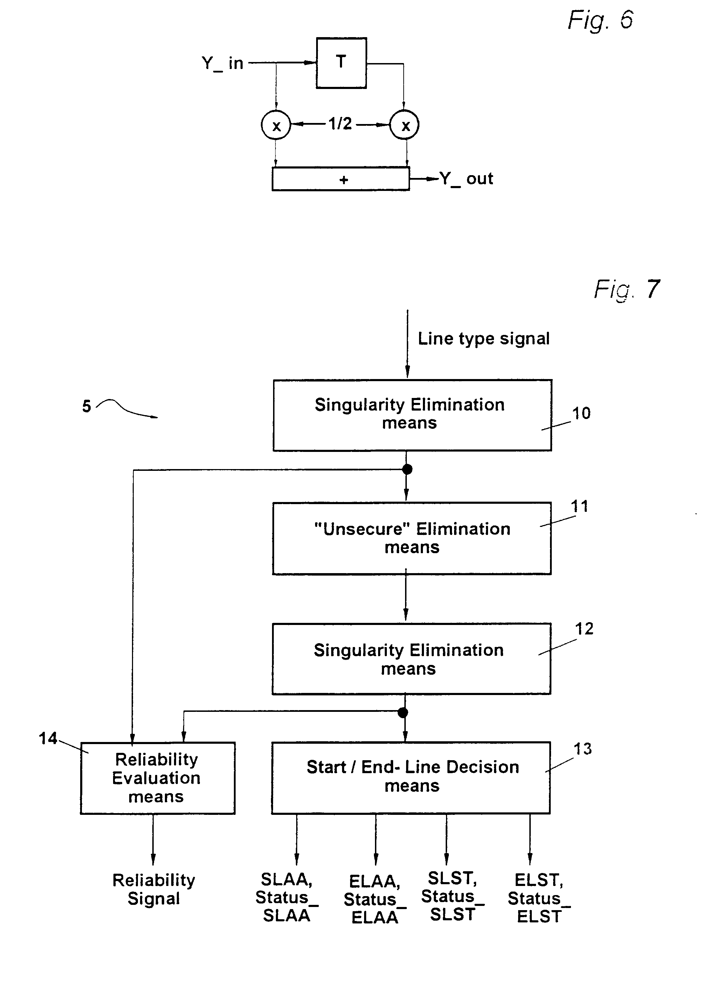

Figure 6 shows a simple 2-tap FIR-filter which may be used as one example for filter means 6.

As will be understood by those skilled in the art, the operation of this filter may be expressed as follows:

$$Y_{out} = \tfrac{1}{2}Y_{in}^{-1} + \tfrac{1}{2}Y_{in}$$

Histogram measurement means or circuit 7 receives the output from lowpass filter 6, compares each pixel of a line against a darkness-brightness threshold value TH_DN_BN and increments for each pixel exceeding the darkness-brightness threshold a brightness counter (BC) by 1. The final count for a full line represents a statistical analysis of the line based on the darkness-brightness threshold.

Similarly, logo detection means or circuit 8 also receives the output of lowpass filter 6. Logo detection measurement circuit 8 counts the length between the first and the last pixel (LBFLP), which is bigger or equal to the darkness-brightness threshold. Since logos are located on a small area of the picture, and have a constrained length, whereas subtitles, in most cases, are longer than the length of a logo, based on the above mentioned length a distinction between logos and subtitles is possible.

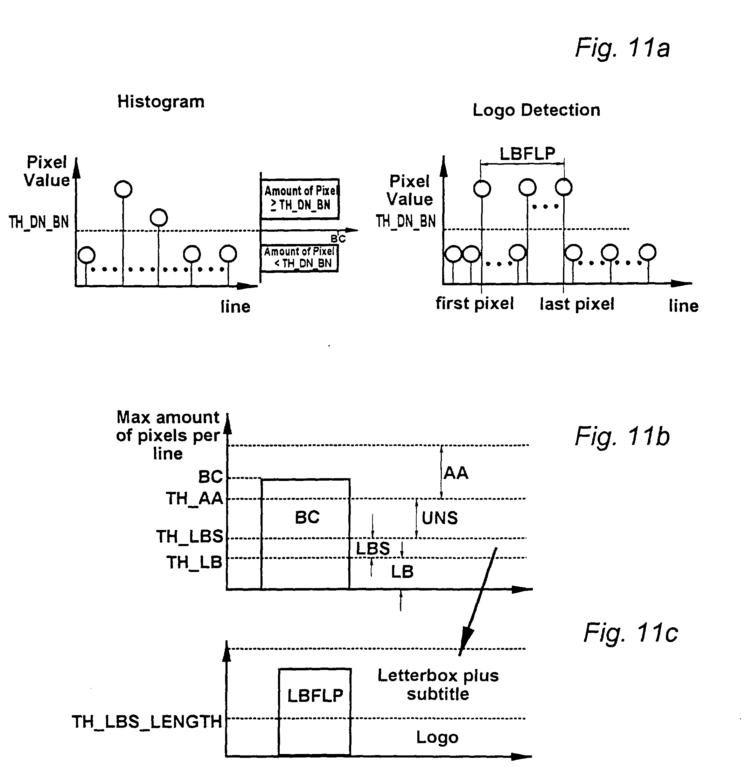

Figure 11 illustrates the operation of histogram measurement means, Figure 11b the operation of logo detection measurement means 8 and Figure 11c the decision made by line type detection means 9, based on the results calculated by means 7 and 8.

Based on the information provided by histogram measurement means or circuit 7 and logo detection measurement means or circuit 8, line type detection circuit 9 decides the type of each line. As shown in Figure 11c, this decision is preferably based on four threshold values. If the amount of the brightness counter is less than the letter box threshold (THLB), then the line type of the line is "letter box" (LB). Vice-versa, if the brightness counter is greater or equal to the active area threshold (THAA) then this line is an "active area" (AA) line type. The line type is "unsecure" (UNS) if the brightness counter is less than the active area result, but greater or equal to the letter box plus subtitle threshold (THLBS). In all other cases, the line type is "letter box plus subtitle" (LBS). Since "letter box plus subtitle" could also be "letter box including logo", the length counter is used to decide whether a line with "letter box plus subtitle" line type is "letter box plus subtitle" or only "letter box" line type including logo and therefore, simple letter box. If the length counter is greater than or equal to the letter box plus subtitle length threshold (THLBS) length, then the line type is letter box plus subtitle (LBS). Otherwise, the line type is letter box (LB).

After the processing performed by line type detection means 9, each line of the letter box picture belongs to a certain area, expressed by the line type. Based on this information, field based part means 5 of Figure 3 is able to determine the start and end lines of the active picture part and of the subtitle part of the picture.

As will be understood by those skilled in the art, the quality of the analysis performed by line based part means 4 of Figure 3 mainly depends on the correct selection of threshold value TH_DN_BN. According to the present invention and as will be explained in more detail herein below, according to the present invention it is preferable to adaptively adjust the threshold value TH_DN_BN based on an analysis performed by controller means 3 of Figure 2.

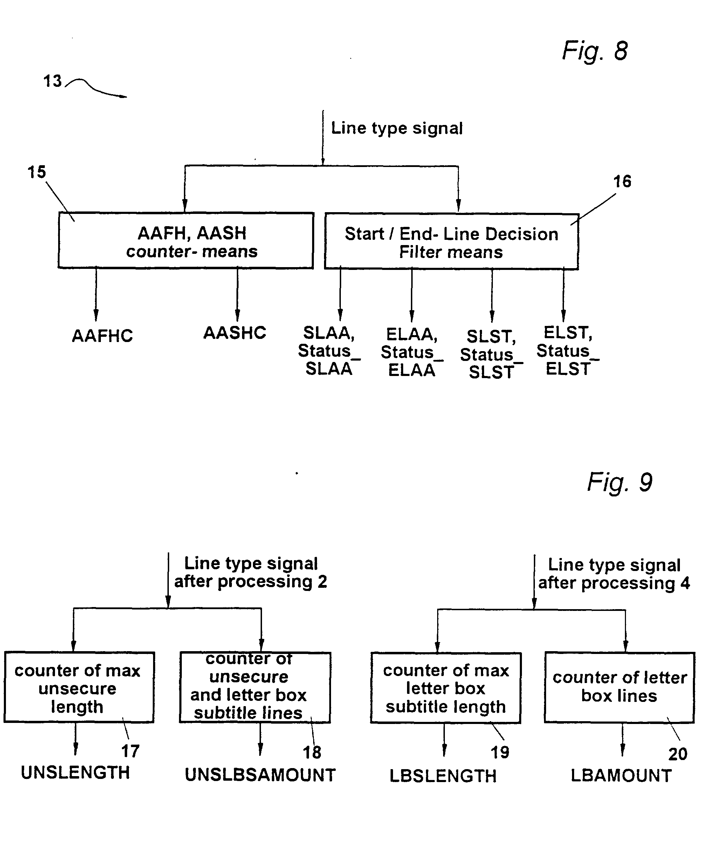

The line type signal output by line type detection means 9 of Figure 5 is applied to field base part means 5 of Figure 3. Figures 7, 8 and 9 illustrate field based part means 5 in more detail.

The field based part means 5 of Figure 3 receives the output of line based part means 4 of Figure 3. The task of this unit is to give sufficient information to the controller means 3 of Figure 2 to prepare the final decision as to which format the actual picture has. As mentioned, the result of the field based part means indicates the start line and the end line of the active area picture, as well as the start line and the end line of the subtitle part of the picture.

The mentioned signals are indicated in Figure 7 as output signals from start/end-line decision means 13. In addition, field based part means 3 outputs a reliability signal which informs whether the provided results are reliable or not. This signal is indicated in Figure 7 as output from reliability evaluation means 14.

In the following the operation of portions 10, 11, 12, 13 and 14 of Figure 7 will be described. Singularity elimination means 10 may be implemented by a non-linear filter having the task of eliminating singularities from the line type decision, as well as to correct line type signal decisions based on knowledge of the dynamic behaviour of the letter box picture.

Unit 10 operates according to the following rule:

If between two line type blocks of length k and m with the same line type a block with any mixture of different line types of the length n exists, this block is substituted with the line type of the outer blocks. The length of the blocks are set by parameters and in a preferred embodiment the value for k and m is 3, and for n is 2.

The correction task is performed based on the following assumptions:

It may happen that the statistical behaviour of a subtitle line in a letter box plus subtitle area, as well as in a pure letter box area is like the statistical behaviour of an active area line. In this case the false detection is corrected in that, in case that a block of lines of active area line type is detected between two blocks of letter box plus subtitle line types/letter box line type, the active area line type determination is changed to letter box plus subtitle line type.

In order to correct false decisions at the beginning and the end of the complete letter box picture, a block of a mixture between letter box plus subtitle and letter box detected between a block of pre-load area and a block of active area is corrected to active area line type. This is important for the start and the end line decision of the active picture part, when the source material is 4:3 non letter box picture.

The task of the unsecure-elimination means 11 is to eliminate unsecure line type decisions. This block substitutes a line type of a line n with a line type of line n-1, when the determination for line n is unsecure. Since, in case of uncertainty, it shall be assumed that each field is a 4:3 picture, the start value of the respective processing is active area line type in case that the line type of the first line type after the pre-load area is unsecure.

The operation of the singularity elimination means 12 is similar to that of unit 10. This block has, preferably, different parameter settings and, preferably, all mentioned parameters k, m, n are 1.

For the description of the operation of start/end line decision means 13, reference is made to Figure 8, showing that this block preferably comprises counter means 15, as well as start/end-line decision filter means 16.

The counter 15 counts the amount of lines with the line type active area in the first half of the letterbox picture (AAFH) as well as the amount of lines with the line type active area in the second half of the letter box picture (AASH). These counter values are used later on to correct the decision of the start/end-line decision block. The reason is to enable a fast decision, if the actual picture is a 4:3 non letter box format source material. Therefore it is necessary to define a minimum amount of lines with an active area line type threshold MA_AA_TH. If the AAFH counter value is greater is or equal to the threshold, the start line of the active area (SLAA) is set to the first line of the complete picture part (FLOP) and if the counter value of AASH counter is greater or equal to the threshold, the end line of the active picture part is set to the last line of the complete picture (LLOP). In addition to that, the corresponding status signals are set to the value true. This is done, in any case, meaning that the decisions of the start/end-line decision block 13 are overwritten, if one or both of the conditions are true.

Start/end-line decision filter 16 makes the decision on two consecutive blocks with the same or mixed line types. The start line of the active picture part (SLAA) is found, when a block with the length p and the mixed line type letter box plus subtitle/letter box or with line type pre-load is followed by a block with the length l and the line type active are. This determination is illustrated in Figure 12. In the same manner, the start line of the subtitle part (SLST) is found, when a block with the length p of the line type letter box is followed by a block of the length n with the line type letter box plus subtitle. Both decisions are only made once, meaning that if a start line was found, the processing of unit 13 is disabled for the actual field of the source material.

Vice-versa, the end line of the active picture part (ELAA) is found, when a block of the length l with the line type active area is followed by a block of length p, with mixed line type letter box plus subtitle/letter box or with the line type pre-load. Again, the end line of the subtitled part is found, when a block of length l with the line type letter box plus subtitle is found by a block with the line type letter box. Both decisions can be made more than once, meaning that if an end line was found, this part of the processing of unit 13 is not disabled for the actual field of the letter box picture.

If a decision was made, the corresponding status signal is set to the value "true". The default value of the status signal is "false".

In a preferred embodiment, p is 3 and l is 10, meaning that the minimum decision basis is three consecutive lines with the same line type.

If the start line and end line of the active picture part is not overwritten by the correction based on the values of counter means 15, the start and the end line of the active picture part, as well as of the subtitle part, and the corresponding status signals, are provided to controller means 3.

Reliability evaluation means 14 receives the output from unit 10 as well as the output from unit 12. Reliability evaluation means 14 is illustrated in more detail in Figure 9.

As shown, the output signal from unit 10 of Figure 7 is applied to counter means 17 and 18 whereas the output of unit 12 of Figure 7 is applied to counter means 19 and 20. Counter 17 counts the maximum length of consecutive lines with the line type unsecure (unslength). The second counter 18 counts the amount of lines with the line type unsecure and letter box plus subtitle (unslbsamount). Counter 19 computes the maximum length of consecutive letter box plus subtitle line type lines (lbslength) and counter 20 computes the amount of letter box line type lines (lbamount). These four values are compared against four corresponding thresholds. The thresholds are, the maximum unsecure line type length threshold MUNSL_TH, the maximum letter box plus subtitle line type length threshold MLBSL_TH, the amount of letter box plus subtitle and unsecure line type threshold ALBSUNS_TH and the amount of letter boy line type threshold ALB_TH. The reliability signal is now set to the value "false" (meaning that the start and end line values are not reliable), when one of the following conditions is true:

$$unslength \quad > \quad MUNSL\_TH \tag{1}$$

$$lbslength \quad > \quad MLBSL\_TH \tag{2}$$

$$unslbsamount \quad > \quad ALBSUNS\_TH \tag{3}$$

$$lbamount \quad > \quad ALB\_TH \tag{4}$$

If none of the four conditions is "true", the reliability signal is set to the value "true", which means that the start and the end line values are reliable.

Condition (1) is true if the length of consecutive lines with the line type unsecure is greater than the threshold MUNSL_TH. The reason for this decision is that, if it not possible to decide a particular as belonging to, the decision is postponed until a secure decision is possible.

Condition (2) is based on the knowledge, that the height of the subtitles in a letter box picture does not exceed a given limit.

Condition (3) is true, if the amount of lines with the line types unsecure and letter box plus subtitle is greater or equal to the threshold ALBSUNS_TH. In this case it is assumed that the complete picture consists of dark areas and therefore of unsecure parts.

Finally, it is not possible that the amount of letter box line types exceed a certain limit. That is the basis for condition (4).

The reliability evaluation part comprises up to four conditions. It is clear that this part can be extended in any case. Despite the low hardware complexity, it was found by simulation that the mentioned four conditions are sufficient.

The reliability signal is applied together with the start and end lines and the corresponding status signals to the controller circuit 3 of Figure 2.

In the following controller means 3 is explained in more detail in connection with Figure 4.

As shown in Figure 4, in a preferred embodiment controller means 3 of Figure 2 comprises a quantiser means 21, an absurdity check means 22 and a final decision block means 23.

Quantiser means 21 receives the above mentioned signals output by start/end-line decision means 13 of Figure 7. The reliability signal output by reliability evaluation means 14 of Figure 7 is received directly from final decision block 23.

As mentioned earlier, the controller means preferably comprises knowledge of the system behaviour and knowledge of the past and provides, based on the information received from the measurement means and based on a plurality of processing steps, finally determined start and end lines of the active picture part and of the subtitle part.

The signals finally output by the controller means are then used to correctly zoom the picture, whereby for this zooming a circuit as described in co-pending European patent application EP-A-0 802 671, "Digital Signal Processing Circuit for a Television Receiver", may be used.

Since such a circuit usually only provides a limited number of different zooming factors, it is preferable that the start and end line signals are quantised. This quantisation is done by quantiser means 21. This is preferably done so that no relevant information is lost. If, for example, the active picture part has a size which with no available zoom factor which may be enlarged to the exact screen size, then that zoom factor is chosen which enlarges the active picture part closest to the full screen size, without thereby enlarging the active picture part so that relevant information is lost from the top and bottom of the active picture part.

Quantised start and end line signals output from the quantiser means are supplied to the absurdity check means 22.

The absurdity check means detects impossible or unlikely combinations of the detected start and end lines.

The evaluation of the absurdity check means is, for example, based on the knowledge, that the end line of the active picture area is always at least a predetermined amount of lines greater than the start line of the active picture. The same relationship also exists for the start and end line of the subtitling area, and respective relationships also exist between the start and end line of the active picture area in regard to the start and end line of the subtitling area.

The absurdity check means 21 informs, through a status signal status AC, the final decision block means whether or not the applied start and end lines of the active picture part and the subtitling part may be regarded as valid.

The task of the final decision block means is to decide which format the actual picture has. The basic idea of the final decision block is to wait for secure and stable signals and then to set up the final start and end lines. As long as the signals are stable, no changes are made. Stable in this context means that the signals do not change their values for a given time period.

In particular, final decision block means 23 evaluates status signal AC provided by absurdity check means 22. If the status AC signal is "false", the actual measurement results are not evaluated and the final signals are not changed. On the contrary, if the status AC signal is "true", the reliability signal provided from the measurement part is evaluated. In the case of a "false" reliability signal, no change of the final signals is made, and further processing for the actual picture is disabled. If the reliability signal is "true", further processing is enabled.

## Claims

1. A letter box picture detection means for receiving a video signal and for providing output signals indicating at least the start and end line of the active picture part of a picture represented by the received video signal, said means comprising:

   first means (4) comprising means (7) for comparing the brightness value of each pixel of a line of the picture against a first threshold value, counting means (7) for counting the amount of pixels exceeding the first threshold value, means (9) for at least determining for each line whether or not the current line is an active area line of the picture, that determination being at least based on the count value provided by the counting means (7), and

second means (5) for determining at least the start and end line of an active area of the picture based on the determination made for each line by the first means (4) and providing a reliability signal, indicating the reliability of the determinations made in regard to the start and end lines, and

a third means (3) for receiving the reliability signal and signals representing the determinations made by the second means in regard to the start and end lines for generating confirmed start and end lines

**characterized in that**
said third means (3) adaptively adjusts said first threshold value on an analysis of the reliability signal.

2. A letter box picture detection means according to claim 1, wherein said means for determining (9) further determines for each non-active area lines of the picture whether or not the respective line is a subtitle part line of the picture, and said second means determines in addition the start and end line of the subtitle part of the picture.

3. A letter box picture detection means according to one of the claims 1 or 2, wherein said first means further comprises means (8) for detecting for each line the distance between the first and the last pixel having a brightness value exceeding that first threshold value, wherein said means for determining (9) determines any non-active area line to be a subtitle line, if said distance is greater than a second threshold value.

4. A letter box picture detection means according to one of the preceding claims, wherein said first means further comprises a filter means for filtering the received video signal, preferably a 2-tap FIR-filter.

5. A letter box picture detection means according to one of the preceding claims further comprising a third means (3) for receiving the reliability signal and signals representing the determinations made by the second means in regard to the start and end lines for generating confirmed start and end lines based on an analysis of the reliability signal and/or based on knowledge obtained from previous measurements and/or based on rules stored in the third means (3).

6. A letter box picture detection means according to one of the preceding claims, wherein said third means (3) adaptively adjusts said first threshold value further based on knowledge obtained from previous measurements and/or based on rules stored in the third means.

7. Integrated circuit comprising a letter box picture detection means according to one of the preceding claims and further comprising means for controlling the zooming of the picture based on the start and end line indications provided by the letter box picture detection means.

8. Television receiver comprising letter box picture detection means according to one of the claims 1 to 6 or an integrated circuit according to claim 7.


**Patentansprüche**

1. Letter-Box-Bild-Erkennungseinrichtung zum Empfang eines Videosignals und zum Bereitstellen eines Ausgabesignals, das zumindest die Anfangs- und Endzeile des aktiven Bildbereichs für ein Bild angibt, das durch das empfangene Videosignal dargestellt wird, wobei die Einrichtung umfaßt:

eine erste Einrichtung (4) mit Mitteln (7) zum Vergleich des Helligkeitswertes jedes Pixels einer Zeile des Bildes mit einem ersten Schwellwert, mit einer Zähleinrichtung (7) zum Zählen der Anzahl von Pixeln, die den ersten Schwellwert überschreiten, mit einer Einrichtung (9), die für jede Zeile zumindest feststellt, ob es sich bei der aktuellen Zeile um eine Zeile des aktiven Bereichs des Bildes handelt, wobei die Feststellung zumindest auf dem Zählwert von der Zähleinrichtung (7) basiert, und

eine zweite Einrichtung (5) zur Bestimmung zumindest der Anfangs- und Endzeile eines aktiven Bildbereichs basierend auf der für jede Zeile von der ersten Einrichtung (4) gemachten Feststellung und zur Bereitstellung eines Zuverlässigkeitssignals, das die Zuverlässigkeit der bezüglich der Anfangs- und Endzeilen gemachten Feststellungen angibt, und

eine dritte Einrichtung (3) zum Empfang des Zuverlässigkeitssignals und von Signalen, die die von der zweiten Einrichtung gemachten Feststellungen bezüglich der Anfangs- und Endzeilen darstellen, um bekräftigte Anfangs- und Endzeilen zu erzeugen,

**dadurch gekennzeichnet,** daß
die dritte Einrichtung (3) adaptiv den ersten Schwellwert basierend auf einer Auswertung des Zuverlässigkeitssignals einstellt.

2. Letter-Box-Bild-Erkennungseinrichtung nach Anspruch 1, wobei die Einrichtung zur Feststellung (9) außerdem für jede Zeile des nicht aktiven Bildbereichs feststellt, ob die entsprechende Zeile eine Zeile eines Untertitelteils des Bildes darstellt, und
die zweite Einrichtung zusätzlich die Anfangs- und Endzeile des Untertitelteils des Bildes bestimmt.

3. Letter-Box-Bild-Erkennungseinrichtung nach einem der Ansprüche 1 oder 2, wobei die erste Einrichtung außerdem Mittel (8) umfaßt, die für jede Zeile den Abstand zwischen dem ersten und dem letzten Pixel mit einem Helligkeitswert erfaßt, der den ersten Schwellwert überschreitet, wobei die Feststellungseinrichtung (9) jede Zeile des nicht aktiven Bereichs als Untertitelzeile bestimmt, wenn der Abstand größer als ein zweiter Schwellwert ist.

4. Letter-Box-Bild-Erkennungseinrichtung nach einem der vorhergehenden Ansprüche, wobei die erste Einrichtung weiterhin eine Filtereinrichtung zum Filtern des empfangenen Videosignals umfaßt, vorzugsweise ein 2-Tap FIR-Filter.

5. Letter-Box-Bild-Erkennungseinrichtung nach einem der vorhergehenden Ansprüche, die weiterhin eine dritte Einrichtung (3) zum Empfang des Zuverlässigkeitssignals und von Signalen umfaßt, die von der zweiten Einrichtung bezüglich der Anfangs- und Endzeile gemachte Feststellungen darstellen, um bekräftigte Anfangs- und Endzeilen basierend auf einer Auswertung des Zuverlässigkeitssignals und/oder basierend auf Wissen, das von vorhergehenden Messungen erhalten wurde und/oder basierend auf Regeln erzeugt werden, die in der dritten Einrichtung (3) gespeichert sind.

6. Letter-Box-Bild-Erkennungseinrichtung nach einem der vorhergehenden Ansprüche, wobei die dritte Einrichtung (3) adaptiv den ersten Schwellwert außerdem basierend auf Wissen, das von vorausgehenden Messungen erhalten wurde, und/oder basierend auf Regeln einstellt, die in der dritten Einrichtung gespeichert sind.

7. Integrierter Schaltkreis mit einer Letter-Box-Bild-Erkennungseinrichtung nach einem der vorhergehenden Ansprüche und außerdem einer Einrichtung zur Steuerung des Bildzooms basierend auf den Anfangs- und Endzeilenangaben, die von der Letter-Box-Bilderkennungseinrichtung zur Verfügung gestellt werden.

8. Fernsehempfänger mit einer Letter-Box-Bilderkennungseinrichtung nach einem der Ansprüche 1 bis 6 oder einem integrierten Schaltkreis nach Anspruch 7.

**Revendications**

1. Moyen de détection d'image du type boîte à lettres pour recevoir un signal vidéo et pour délivrer des signaux de sortie indiquant au moins la ligne de début et la ligne de fin de la partie d'image active d'une image représentée par le signal vidéo reçu, ledit moyen comprenant :

un premier moyen (4) comprenant un moyen (7) pour comparer la valeur de luminosité de chaque pixel d'une ligne de l'image par rapport à une première valeur de seuil, un moyen de comptage (7) pour compter la quantité de pixels dépassant la première valeur de seuil, un moyen (9) pour déterminer au moins pour chaque ligne si oui ou non la ligne courante est une ligne de la zone active de l'image, cette détermination étant au moins basée sur la valeur de comptage délivrée par le moyen de comptage (7), et
un second moyen (5) pour déterminer au moins la ligne de début et la ligne de fin d'une zone active de l'image sur la base de la détermination effectuée pour chaque ligne par le premier moyen (4) et pour délivrer un signal de fiabilité, indiquant la fiabilité des déterminations effectuées eues égard aux lignes de début et de fin, et

un troisième moyen (3) pour recevoir le signal de fiabilité et les signaux représentant les déterminations effectuées par le second moyen eu égard aux lignes de début et de fin pour générer des lignes de début et de fin confirmées

**caractérisé ce que**

ledit troisième moyen (3) ajuste de manière adaptative ladite première valeur de seuil sur analyse du signal de fiabilité.

**2.** Moyen de détection d'image du type boîte à lettres selon la revendication 1, dans lequel ledit moyen de détermination (9) détermine, en outre, pour chaque ligne de zone non- active de l'image si oui ou non la ligne respective est une ligne de partie de sous-titre de l'image, et

ledit second moyen détermine, de plus, la ligne de début et de fin de la partie de sous-titre de l'image.

**3.** Moyen de détection d'image du type boîte à lettres selon l'une quelconque des revendications 1 ou 2, dans lequel ledit premier moyen comprend, en outre, un moyen (8) pour détecter pour chaque ligne la distance entre le premier pixel et le dernier pixel ayant une valeur de luminosité dépassant celle de la première valeur de seuil, dans lequel ledit moyen de détermination (9) détermine toute ligne de la zone non active comme étant une ligne de sous-titre, si ladite distance est supérieure à une seconde valeur de seuil.

**4.** Moyen de détection d'image du type boîte à lettres selon l'une quelconque des revendications précédentes, dans lequel ledit premier moyen comprend, en outre, un moyen de filtre pour filtrer le signal vidéo reçu, de préférence, un filtre à réponse impulsionnelle finie à deux prises.

**5.** Moyen de détection d'image du type boîte à lettres selon l'une quelconque des revendications précédentes comprenant, en outre, un troisième moyen (3) pour recevoir le signal de fiabilité et les signaux représentant les déterminations effectuées par le second moyen eu égard aux ligne de début et de fin pour générer des lignes de début et de fin confirmées sur la base de l'analyse du signal de fiabilité et/ou sur la base de la connaissance obtenue depuis des mesures précédentes et/ou sur la base de règles stockées dans le troisième moyen (3).

**6.** Moyen de détection d'image du type boîte à lettres selon l'une quelconque des revendications précédentes, dans lequel ledit troisième moyen (3) ajuste de manière adaptative ladite première valeur de seuil en outre sur la base de la connaissance obtenue depuis les mesures précédentes et/ou sur la base des règles stockées dans le troisième moyen.

**7.** Circuit intégré comprenant un moyen de détection d'image du type boîte à lettres selon l'une quelconque des revendications précédentes et comprenant, en outre, un moyen pour commander le grossissement de l'image sur la base des indications de ligne de début et de fin délivrées par le moyen de détection d'image dudit du type boîte à lettres.

**8.** Récepteur de télévision comprenant un moyen de détection d'image du type boîte à lettres selon l'une quelconque des revendications 1 à 6 ou un circuit intégré selon la revendication 7.

4:3 letterbox picture         zoomed up letter box picture

Fig. 1

Fig. 2

Fig. 3

*Fig. 4*

Reliability Signal

SLAA, Status_SLAA

ELAA, Status_ELAA

SLST, Status_SLST

ELST, Status_ELST

Quantisier means — 21

QSLAA, Status_SLAA

QELAA, Status_ELAA

QSLST, Status_SLST

QELST, Status_ELST

Absurdtiy Check means — 22

Status_ AC

QSLAA, Status_SLAA

QELAA, Status_ELAA

QSLST, Status_SLST

QELST, Status_ELST

Final Decision Block- means — 23

FSLAA     FELAA     FSLST     FELST

*Fig. 5*

Y

noise reduction filter means — 6

Histogram means — 7

Logo Detection means — 8

BC

LBFLP

Line type Detection- means — 9

Line type signal

*Fig. 6*

Y_ in ⟶ [ T ]

(x) ⟵ 1/2 ⟶ (x)

[ + ] ⟶ Y_ out

*Fig. 7*

Line type signal

5

| Singularity Elimination means | 10 |

| "Unsecure" Elimination means | 11 |

| Singularity Elimination means | 12 |

14

| Reliability Evaluation means |

| Start / End- Line Decision means | 13 |

Reliability Signal

SLAA, Status_ SLAA

ELAA, Status_ ELAA

SLST, Status_ SLST

ELST, Status_ ELST

*Fig. 8*

*Fig. 9*

*Fig. 10*

*Fig.12*

*Fig. 11a*

### Histogram

Pixel
Value

TH_DN_BN - - - - - - - - - - - - - - - - -

line

Amount of Pixel
≥ TH_DN_BN

BC

Amount of Pixel
< TH_DN_BN

### Logo Detection

LBFLP

Pixel
Value

TH_DN_BN - - - - - - - - - - - - - - - - - - - - - -

first pixel    last pixel    line

*Fig. 11b*

Max amount
of pixels per
line

BC - - - - - - - - - - - - - - - - - - - - - - - - - - - -
TH_AA - - - - - - - - - - - - - - - - - - - - - - - - -
TH_LBS - - - - - - - - - - - - - - - - - - - - - - - - -
TH_LB - - - - - - - - - - - - - - - - - - - - - - - - - -

BC

AA

UNS

LBS

LB

*Fig. 11c*

TH_LBS_LENGTH - - - - - - - - - - - - - - - - -

LBFLP

Letterbox plus
subtitle

Logo